# EUROPEAN PATENT APPLICATION

(11) **EP 4 412 325 A1**
(43) Date of publication of application: **07.08.2024**
(21) Application number: 22876775.2
(22) Date of filing: 26.09.2022
(51) Int. Cl.: H04W 56/00, H04W 74/08, H04W 76/15, H04W 84/12

(54) **METHOD AND DEVICE FOR TRANSMITTING SYNCHRONIZATION INFORMATION FOR NSTR OPERATION IN COMMUNICATION SYSTEM SUPPORTING MULTI-LINKS**

(30) Priority: 29.09.2021 KR 20210129052
(71) Applicant: HYUNDAI MOTOR COMPANY, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2022/014370
(87) International publication number: WO 2023/055003

(57) **Abstract**

Disclosed are a method and device for transmitting synchronization information for a NSTR operation in a communication system supporting multi-links. A method of an AP MLD comprises the steps of: transmitting a first trigger frame over a first link; transmitting a second trigger frame over a second link; receiving, over the first link, a first data frame triggered by the first trigger frame; receiving, over the second link, a second data frame triggered by the second trigger frame; generating a first reception response frame and a second reception response frame having the same lengths; transmitting the first reception response frame over the first link, as a response to the first data frame; and transmitting the second reception response frame over the second link, as a response to the second data frame.

## Description

### [Technical Field]

The present disclosure relates to a wireless local area network (LAN) communication technique, and more particularly, to a technique for synchronous transmissions on links that do not support simultaneous transmit and receive (STR) operations.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards using the wireless LAN technology are being standardized as IEEE802.11 standards mainly in the Institute of Electrical and Electronics Engineers (IEEE). As the above-described wireless LAN technologies have been developed and spread, applications using the wireless LAN technologies have been diversified, and a demand for a wireless LAN technology supporting a higher throughput has arisen. Accordingly, a frequency bandwidth (e.g., 'maximum 160 MHz bandwidth' or '80+80 MHz bandwidth') used in the IEEE 802.11ac standard has been expanded, and the number of supported spatial streams has also increased. The IEEE 802.11ac standard may be a very high throughput (VHT) wireless LAN technology supporting a high throughput of 1 gigabit per second (Gbps) or more. The IEEE 802.11ac standard can support downlink transmission for multiple stations by utilizing the MIMO techniques.

As applications requiring higher throughput and applications requiring real-time transmission occur, the IEEE 802.11be standard, which is an extreme high throughput (EHT) wireless LAN technology, is being developed. The goal of the IEEE 802.11be standard may be to support a high throughput of 30 Gbps. The IEEE 802.11be standard may support techniques for reducing a transmission latency. In addition, the IEEE 802.11be standard can support a more expanded frequency bandwidth (e.g., 320 MHz bandwidth), multi-link transmission and aggregation operations including multi-band operations, multiple access point (AP) transmission operations, and/or efficient retransmission operations (e.g., hybrid automatic repeat request (HARQ) operations).

However, since multi-link operations are operations not defined in the existing wireless LAN standard, it may be necessary to define detailed operations according to an environment in which the multi-link operations are performed. In particular, in order to transmit data on multiple links, a channel access method may be required on each link, and a data transmission and reception method based on low-power operations may also be required. In the above-described situation, multi-link operations need to be defined.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for synchronous transmission in a communication system supporting multiple links.

### [Technical Solution]

A method of an access point (AP) multi-link device (MLD), according to a first exemplary embodiment of the present disclosure for achieving the above-described objective, may comprise: transmitting a first trigger frame on a first link; transmitting a second trigger frame on a second link; receiving a first data frame triggered by the first trigger frame on the first link; receiving a second data frame triggered by the second trigger frame on the second link; generating a first reception response frame and a second reception response frame having a same length; transmitting the first reception response frame in response to the first data frame on the first link; and transmitting the second reception response frame in response to the second data frame on the second link, wherein transmission of the first reception response frame and transmission of the second reception response frame are synchronized.

The first trigger frame and the second trigger frame may be transmitted simultaneously, and each of the first trigger frame and the second trigger frame may trigger orthogonal frequency division multiple access (OFDMA) transmission.

The first trigger frame may request information on a length of the first reception response frame, and the second trigger frame may request information on a length of the second reception response frame.

Each of the first trigger frame and the second trigger frame may include a single response scheduling (SRS) indication message requesting information on a length, and the SRS indication message may include at least one of an SRS request indicator field, a response type field, an indication type field, or an estimated next trigger frame (TF) size field.

The first data frame may include information on a length of the first reception response frame, and the second data frame may include information on a length of the second reception response frame.

The generating of the first reception response frame and the second reception response frame having the same length may comprise: identifying a first length of the first reception response frame indicated by the first data frame; identifying a second length of the second reception response frame indicated by the second data frame; determining a longer length among the first length and the second length as the length of the first reception response frame and the second reception response frame; and generating the first reception response frame and the second reception response frame having the determined length.

The first reception response frame may be transmitted together with a third trigger frame triggering transmission of a third data frame on the first link, the second reception response frame may be transmitted together with a fourth trigger frame triggering transmission of a fourth data frame on the second link, and an end time of the third trigger frame and an end time of the fourth trigger frame may be synchronized.

A method of a station (STA), according to a second exemplary embodiment of the present disclosure for achieving the above-described objective, may comprise: receiving a first trigger frame from an access point (AP) on a first link; calculating a length of a first reception response frame for a first data frame triggered by the first trigger frame; transmitting the first data frame including information on the length of the first reception response frame to the AP on the first link; and receiving the first reception response frame for the first data frame from the AP on the first link.

The first trigger frame may trigger orthogonal frequency division multiple access (OFDMA) transmission, and the first trigger frame may request information on a length of the first reception response frame.

The first trigger frame may include a single response scheduling (SRS) indication message requesting information on a length, and the SRS indication message may include at least one of an SRS request indicator field, a response type field, an indication type field, or an estimated next trigger frame (TF) size field.

The calculating of the length of the first reception response frame may comprise: identifying a number of medium access control (MAC) layer protocol data units (MPDUs) included in the first data frame; and calculating the length of the first reception response frame based on the number of MPDUs.

A length of the first reception response frame and a length of the second reception response frame transmitted by the AP on the second link may be set to be equal based on the information on the length of the first reception response frame, and the first reception response frame and the second reception response frame may be transmitted synchronously by the AP.

An AP MLD, according to a third exemplary embodiment of the present disclosure for achieving the above-described objective, may comprise: a processor; and a memory storing one or more instructions executable by the processor, wherein the one or more instructions may be executed to perform: transmitting a first trigger frame on a first link; transmitting a second trigger frame on a second link; receiving a first data frame triggered by the first trigger frame on the first link; receiving a second data frame triggered by the second trigger frame on the second link; generating a first reception response frame and a second reception response frame having a same length; transmitting the first reception response frame in response to the first data frame on the first link; and transmitting the second reception response frame in response to the second data frame on the second link, wherein transmission of the first reception response frame and transmission of the second reception response frame are synchronized.

The first trigger frame and the second trigger frame may be transmitted simultaneously, and each of the first trigger frame and the second trigger frame may trigger orthogonal frequency division multiple access (OFDMA) transmission.

The first trigger frame may request information on a length of the first reception response frame, and the second trigger frame may request information on a length of the second reception response frame.

Each of the first trigger frame and the second trigger frame may include a single response scheduling (SRS) indication message requesting information on a length, and the SRS indication message may include at least one of an SRS request indicator field, a response type field, an indication type field, or an estimated next trigger frame (TF) size field.

The first data frame may include information on a length of the first reception response frame, and the second data frame may include information on a length of the second reception response frame.

In the generating of the first reception response frame and the second reception response frame having the same length, the one or more instructions may be further executed to perform: identifying a first length of the first reception response frame indicated by the first data frame; identifying a second length of the second reception response frame indicated by the second data frame; determining a longer length among the first length and the second length as the length of the first reception response frame and the second reception response frame; and generating the first reception response frame and the second reception response frame having the determined length.

The first reception response frame may be transmitted together with a third trigger frame triggering transmission of a third data frame on the first link, the second reception response frame may be transmitted together with a fourth trigger frame triggering transmission of a fourth data frame on the second link, and an end time of the third trigger frame and an end time of the fourth trigger frame may be synchronized.

### [Advantageous Effects]

According to the present disclosure, communication between devices (e.g. stations, access points) may be performed using a multi-link. If some links (e.g. some channels) of the multi-link are adjacent, simultaneous transmit and receive (STR) operations may not be performed. In order for an STR multi-link device (MLD) to efficiently perform communication on the multi-link, synchronous transmissions may be supported. If synchronous transmissions are supported on NSTR links, data can be transmitted and received without errors. Accordingly, the performance of the communication system can be improved.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3 is a sequence chart illustrating a first exemplary embodiment of a negotiation procedure for a multi-link operation in a wireless LAN system.
FIG. 4 is a timing diagram illustrating a first exemplary embodiment of a multi-user (MU) transmission method in a communication system.
FIG. 5A is a block diagram illustrating a first exemplary embodiment of a format of a trigger frame.
FIG. 5B is a block diagram illustrating a second exemplary embodiment of a format of a trigger frame.
FIG. 6 is a timing diagram illustrating a second exemplary embodiment of an MU transmission method in a communication system.
FIG. 7 is a timing diagram illustrating a first exemplary embodiment of a direct transmission method in a communication system.
FIG. 8 is a timing diagram illustrating a first exemplary embodiment of a downlink synchronization transmission method in a communication system.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as `comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a `wireless communication network'.

In exemplary embodiments, `configuration of an operation (e.g., transmission operation)' may mean that `configuration information (e.g., information element(s), parameter(s)) for the operation' and/or `information indicating to perform the operation' is signaled. 'Configuration of an information element (e.g., parameter)' may mean that the information element is signaled. 'Configuration of a resource (e.g., resource region)' may mean that setting information of the resource is signaled.

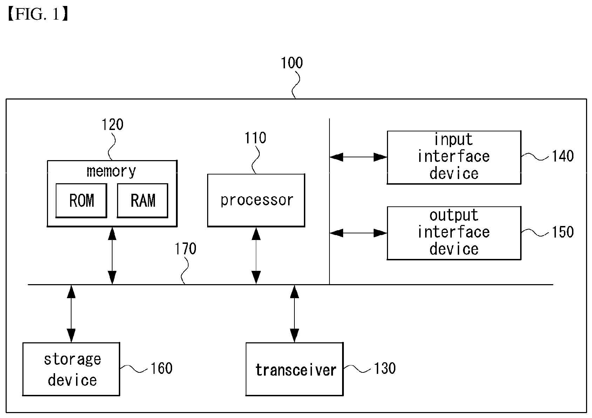

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to 'AP', and a station may refer to 'STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present invention are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

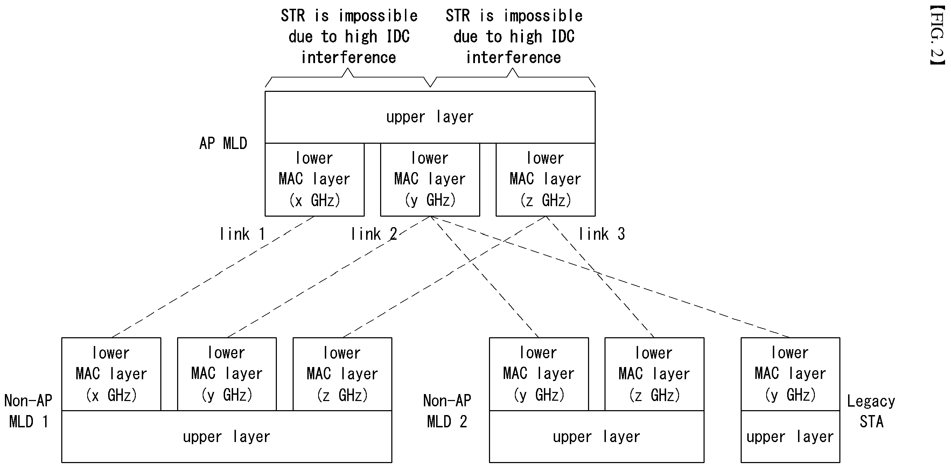

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD). An AP of an AP MLD (e.g. STR AP MLD or NSTR AP MLD) may mean an AP affiliated with the AP MLD. A STA of a STA MLD (e.g. STR STA MLD or NSTR STA MLD) may mean an STA affiliated with the STA MLD.

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a `communication node' or `lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.1 1a/b/g/n/ac/ax STA) may be connected to one or more links of the multi-link supported by the AP MLD.

Each of the AP MLD and the STA MLD may have an MLD MAC address, and each of the AP and the STA operating in each link may have a MAC address. The MLD MAC address of the AP MLD may be referred to as an AP MLD MAC address, and the MLD MAC address of the STA MLD may be referred to as a STA MLD MAC address. The MAC address of the AP may be referred to as an AP MAC address, and the MAC address of the STA may be referred to as a STA MAC address. In a multi-link negotiation procedure, the AP MLD MAC address and the STA MLD MAC address may be used. The address of the AP and the address of the STA may be exchanged and/or configured in the multi-link negotiation procedure.

When the multi-link negotiation procedure is completed, the AP MLD may generate an address table and manage and/or update the address table. One AP MLD MAC address may be mapped to one or more AP MAC addresses, and corresponding mapping information may be included in the address table. One STA MLD MAC address may be mapped to one or more STA MAC addresses, and corresponding mapping information may be included in the address table. The AP MLD may identify address information based on the address table. For example, when a STA MLD MAC address is received, the AP MLD may identify one or more STA MAC addresses mapped to the STA MLD MAC address based on the address table.

In addition, the STA MLD may manage and/or update the address table. The address table may include `mapping information between the AP MLD MAC address and the AP MAC address(es)' and/or `mapping information between the STA MLD MAC address and the STA MAC address(es)'. The AP MLD may receive a packet from a network, identify an address of a STA MLD included in the packet, identify link(s) supported by the STA MLD, and may identify STA(s) taking charge of the link(s) from the address table. The AP MLD may set STA MAC address(es) of the identified STA(s) as receiver address(es), and may generate and transmit frame(s) including the receiver address(es).

Meanwhile, in a wireless LAN system, a negotiation procedure for a multi-link operation may be performed in an access procedure between a station and an access point.

A device (e.g., access point, station) that supports multiple links may be referred to as 'multi-link device (MLD)'. An access point supporting multiple links may be referred to as 'AP MLD', and a station supporting multiple links may be referred to as 'non-AP MLD' or 'STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g., status change information) received on the respective links, and control operations performed by the STA1 based on the collected information.

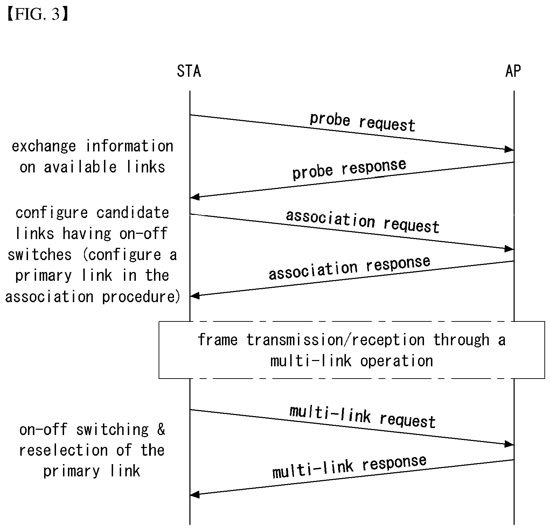

FIG. 3 is a sequence chart illustrating a first exemplary embodiment of a negotiation procedure for a multi-link operation in a wireless LAN system.

As shown in FIG. 3 an access procedure between an STA and an AP in an infrastructure basic service set (BSS) may generally be divided into a probe step of probing AP(s), an authentication step for authentication between the STA and the probed AP, and an association step of association between the STA and the authenticated AP.

In the probe step, the STA may detect one or more APs using a passive scanning scheme or an active scanning scheme. When the passive scanning scheme is used, the STA may detect one or more APs by overhearing beacons transmitted by the one or more APs. When the active scanning scheme is used, the STA may transmit a probe request frame, and may detect one or more APs by receiving probe response frames that are responses to the probe request frame from the one or more APs.

When the one or more APs are detected, the STA may perform an authentication step with the detected AP(s). In this case, the STA may perform the authentication step with a plurality of APs. An authentication algorithm according to the IEEE 802.11 standard may be classified into an open system algorithm of exchanging two authentication frames, a shared key algorithm of exchanging four authentication frames, and the like.

The STA may transmit an authentication request frame based on the authentication algorithm according to the IEEE 802.11 standard, and may complete authentication with the AP by receiving an authentication response frame that is a response to the authentication request frame from the AP.

When the authentication with the AP is completed, the STA may perform an association step with the AP. In particular, the STA may select one AP among AP(s) with which the STA has performed the authentication step, and perform the association step with the selected AP. That is, the STA may transmit an association request frame to the selected AP, and may complete the association with the AP by receiving an association response frame that is a response to the association request frame from the selected AP.

Meanwhile, a multi-link operation may be supported in the wireless LAN system. A multi-link device (MLD) may include one or more STAs affiliated with the MLD. The MLD may be a logical entity. The MLD may be classified into an AP MLD and a non-AP MLD. Each STA affiliated with the AP MLD may be an AP, and each STA affiliated with the non-AP MLD may be a non-AP STA. In order to configure a multi-link, a multi-link discovery procedure, a multi-link setup procedure, and the like may be performed. The multi-link discovery procedure may be performed in the probe step between an STA and an AP. In this case, multi-link information elements (ML IEs) may be included in the beacon frame, the probe request frame, and/or the probe response frame.

For example, in order to perform a multi-link operation, in the probe step, the AP (e.g., AP affiliated with an MLD) may exchange information indicating whether the multi-link operation can be used and information on available link(s) with the STA (e.g., non-AP STA affiliated with an MLD). In a negotiation procedure for the multi-link operation (e.g., multi-link setup procedure), the STA and/or the AP may transmit information of link(s) to be used for the multi-link operation. The negotiation procedure for the multi-link operation may be performed in the access procedure (e.g., association step) between the STA and the AP, and information element(s) required for the multi-link operation may be configured or changed by an action frame in the negotiation procedure.

In addition, in the access procedure (e.g., association step) between the STA and the AP, available link(s) of the AP may be configured, and an identifier (ID) may be assigned to each link. Thereafter, in the negotiation procedure and/or change procedure for the multi-link operation, information indicating whether each link is activated may be transmitted, and the information may be expressed using the link ID(s).

The information indicating whether the multi-link operation can be used may be transmitted and received in a procedure of exchanging capability information element(s) (e.g., EHT capability information element(s)) between the STA and the AP. The capability information element(s) may include information of supporting band(s), information of supporting link(s) (e.g., ID(s) and/or number of supporting link(s)), information of links capable of simultaneous transmission and reception (STR) operations (e.g., information on bands of the links, information on a separation between the links), and/or the like. In addition, the capability information element(s) may include information that individually indicates a link capable of the STR operation.

Meanwhile, a communication node (e.g. access point, station, etc.) belonging to a wireless LAN system may perform frame transmission and reception operations based on a point coordination function (PCF), hybrid coordination function (HCF), HCF controlled channel access (HCCA), distributed coordination function (DCF), enhanced distributed channel access (EDCA), and/or the like.

In a wireless LAN system, frames may be classified into management frames, control frames, and data frames. The management frames may include an association request frame, association response frame, reassociation request frame, reassociation response frame, probe request frame, probe response frame, beacon frame, disassociation frame, authentication frame, deauthentication frame, action frame, and the like.

The control frames may include an acknowledgement (ACK) frame, block ACK request (BAR) frame, block ACK (BA) frame, power saving (PS)-Poll frame, request to send (RTS) frame, clear to send (CTS) frame, and the like. The data frames may be classified into quality of service (QoS) data frames and non-QoS data frames. The QoS data frame may refer to a data frame requiring transmission according to QoS, and the non-QoS data frame may refer to a data frame not requiring transmission according to QoS. The QoS data frame may include a QoS Null data frame. The QoS Null data frame may be referred to as a QoS Null frame.

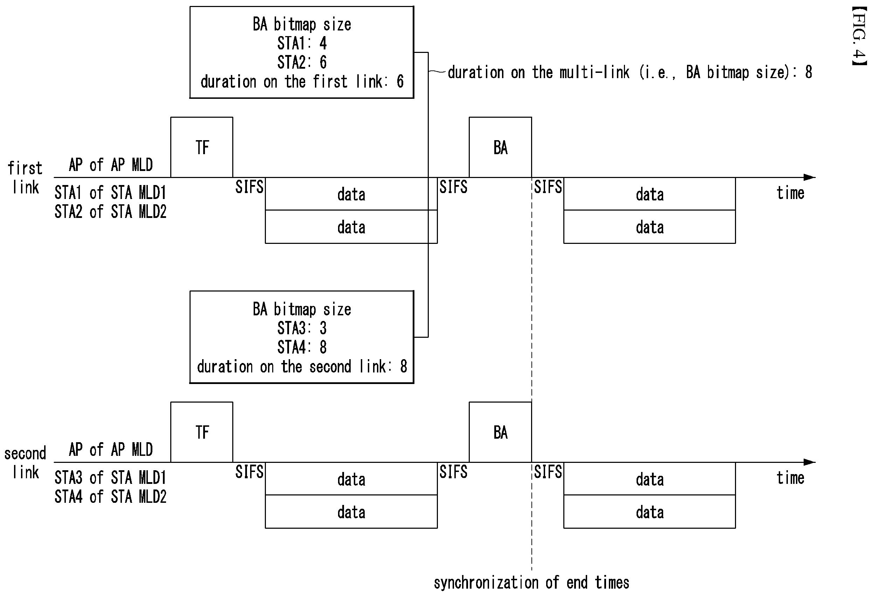

FIG. 4 is a timing diagram illustrating a first exemplary embodiment of a multi-user (MU) transmission method in a communication system.

As shown in FIG. 4, an AP (e.g. AP MLD) may transmit data frames to a plurality of STA MLDs. In exemplary embodiments, a data frame may be referred to as data, a data unit, a physical layer protocol data unit (PPDU), and/or a medium access control (MAC) layer protocol data unit (MPDU). The AP MLD and STA MLDs may operate on a multi-link (e.g. first link and second link). The AP MLD may transmit trigger frames (TFs) simultaneously on the first link and the second link. The trigger frame may include information requesting to transmit data frames based on an orthogonal frequency division multiple access (OFDMA) scheme. That is, the trigger frame may trigger OFDMA transmission. Each of the STAs may receive the trigger frame from the AP, and identify information included in the trigger frame (e.g. frequency resource allocation information, uplink time information). That is, the STAs may identify that data frame transmission in the OFDMA scheme is requested.

Each of the STAs may transmit a data frame (e.g. uplink (UL) PPDU) to the AP in a frequency resource indicated by the trigger frame after a short interframe space (SIFS) elapses from a time of receiving the trigger frame. The data frame may include one or more MPDUs. The AP may receive the data frames from the STAs and transmit a reception response frame for the MPDUs included in the data frames to the STAs. The reception response frame may be an acknowledgment (ACK) frame or a block ACK (BA) frame. The STAs may receive the reception response frame for the data frames from the AP.

The STA MLD may be an NSTR STA MLD that does not support STR operations. In this case, if start times and end times of the trigger frames of the AP match on the multi-link, the STAs may normally transmit the data frames to the AP. In exemplary embodiment, a start time may mean a transmission start time or a reception start time, and an end time may mean a transmission end time or a reception end time. On the multi-link, it may be difficult for the AP to match start times, end times, and/or durations of the reception response frames for the data frames without additional information. That is, it may be difficult to match the lengths of the reception response frames so that the end times of the reception response frames are synchronized on the multi-link.

In order to match the lengths of the reception response frames to be transmitted by the AP on the respective links, the AP MLD may request the STAs to inform information on the length of the reception response frame. The trigger frame transmitted by the AP on each link may include information requesting information on the length of the reception response frame. For example, the trigger frame may include a single response scheduling (SRS) request indicator that requests transmission of a data frame (e.g. UL PPDU) including an SRS control (e.g. SRS control information).

The SRS control information may be a type of A-control included in a header (e.g. MAC header) of the MPDU. The SRS control information may include information indicating a PPDU response duration, which is the length of the reception response frame for the MPDU including the corresponding SRS control information. The SRS request indicator may be transmitted from the AP to the STA. The SRS request indicator may indicate whether to use SRS. The SRS request indicator set to a first value (e.g. 0) may indicate that the SRS is not used. The SRS request indicator set to a second value (e.g. 1) may indicate that the SRS is used.

An MPDU (e.g. trigger frame) may include an SRS request indicator field, a response type field, an indication type field, and an estimated next TF size field. The SRS request indicator field may be set to 1. The response type field may indicate the type of reception response frame to be transmitted by the AP. For example, the response type field may indicate an OFDMA BA, multi-STA BA, or non-high throughput (HT) duplicated BA. The indication type field may indicate information on a unit of the reception response frame. For example, the indication type field may indicate a duration, byte, or BA bitmap size. The estimated next TF size field may indicate the length of the trigger frame that the AP transmits next.

Each of the STAs may receive the trigger frame from the AP and identify the SRS request indicator field included in the trigger frame. When the SRS request indicator field indicates the use (or transmission) of SRS, the STAs may generate a PPDU (e.g. data frame) including SRS control information, and transmit the PPDU to the AP after a SIFS elapses from the time of receiving the trigger frame. Here, the PPDU may be a trigger based (TB) PPDU.

Based on the type of reception response frame indicated by the trigger frame, the STAs may calculate the length of the reception response frame for the PPDU and generate a PPDU response duration (e.g. PPDU response duration field) indicating the length of the reception response frame. The PPDU response duration field may be included in the PPDU (e.g. data frame). If the type of reception response frame indicated by the trigger frame is an OFDMA BA, the STA may calculate the length of the reception response frame by considering a resource unit (RU) and a modulation and coding scheme (MCS) for the PPDU transmitted according to the trigger frame. If the type of reception response frame indicated by the trigger frame is a multi-STA BA, the STA may calculate the length of the multi-STA BA associated with the STA by considering the RU and MCS for the PPDU.

The length of the reception response frame indicated by the PPDU response duration field included in the SRS control information may be expressed in units indicated by the indication type field included in the trigger frame. For example, when the indication type field indicates a duration, the PPDU response duration field of the SRS control information may indicate the length of the reception response frame considering the same MCS as the PPDU. When the indication type field indicates a byte, the PPDU response duration field of the SRS control information may indicate the length of the reception response frame in bytes. When the indication type field indicates a BA bitmap size and the PPDU has an aggregated (A)-MPDU form, the BA bitmap size may be equal to the number of MPDUs included in the A-MPDU. That is, the PPDU response duration field of the SRS control information may indicate the number of MPDUs included in the A-MPDU.

The AP MLD may receive data frames (e.g. TB PPDUs) from the STAs on the multi-link, and identify the PPDU response duration (e.g. the length of the reception response frame) based on the SRS control information included in the MAC header of each data frame. The AP MLD may identify the longest PPDU response duration on each link, compare PPDU response durations on the multi-link, and select the longest PPDU response duration according to a result of the comparison. For example, the PPDU response duration field included in the SRS control information of the data frame received from the STA1 of STA MLD1 on the first link may indicate that the BA bitmap size is 4, and the PPDU response duration field included in the SRS control information of the data frame received from the STA2 of STA MLD2 on the first link may indicate that the BA bitmap size is 6. In this case, the AP of the AP MLD may select the PPDU response duration as 6 on the first link.

The PPDU response duration field included in the SRS control information of the data frame received from the STA3 of STA MLD1 on the second link may indicate that the BA bitmap size is 3, and the PPDU response duration field included in the SRS control information of the data frame received from the STA4 of STA MLD2 on the second link may indicate that the BA bitmap size is 8. In this case, the AP of the AP MLD may select the PPDU response duration as 8 on the second link. The AP MLD may compare the PPDU response duration (i.e. 6) on the first link and the PPDU response duration (i.e. 8) on the second link, and select the longest PPDU response duration (i.e. 8) based on a result of the comparison. That is, the size of the BA bitmap, which is the reception response frame for the data frame on the multi-link, may be 8 bits. The AP may transmit reception response frames with the same length on the multi-link.

On the multi-link, end times of the reception response frames may be synchronized according to the length indicated by the PPDU response duration field included in the SRS control information. That is, a start time, end time, and/or length of the reception response frame on the first link may be synchronized with a start time, end time, and/or length of the received response frame on the second link. The AP MLD may transmit the reception response frames for the data frames on the multi-link. The corresponding reception response frame may include a trigger frame indicating next uplink transmission. Alternatively, the reception response frame may be transmitted along with a trigger frame that triggers transmission of the next data frame. In this case, the end time of the trigger frame transmitted along with the reception response frame on the multi-link may be synchronized.

The STAs may receive the reception response frames from the AP, and identify the trigger frames included in the reception response frames or the trigger frames received together with the reception response frames. In this case, the STAs may perform synchronous uplink transmissions on the respective links. Synchronization of the transmissions of the reception response frames through the SRS request indicators may be performed when the AP needs to perform a transmission and reception procedure of a plurality of synchronized PPDUs with NSTR STAs within a TXOP configured on a multi-link. An SRS request indicator for the last reception response frame within the TXOP may not be needed.

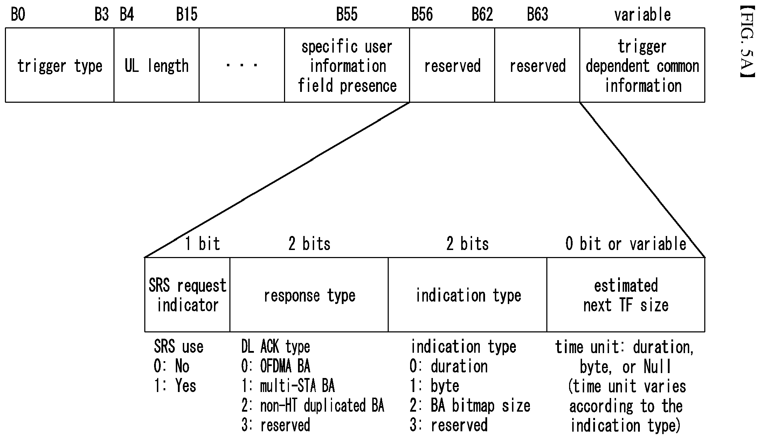

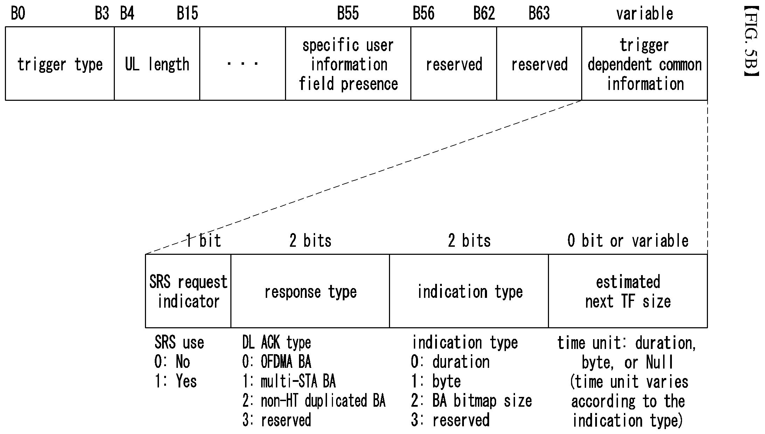

FIG. 5A is a block diagram illustrating a first exemplary embodiment of a format of a trigger frame, and FIG. 5B is a block diagram illustrating a second exemplary embodiment of a format of a trigger frame.

As shown in FIGS. 5A and 5B, a trigger frame may include an SRS indication message, and the SRS indication message may include an SRS request indicator field, a response type field, an indication type field, and an estimated next TF size field. In the exemplary embodiment of FIG. 5A, the SRS indication message may be included in a reserved field of the trigger frame. In the exemplary embodiment of FIG. 5B, the SRS indication message may be included in a trigger dependent common information field of the trigger frame. The response type field included in the SRS indication message may indicate the type of reception response frame to be transmitted by the AP. The indication type field included in the SRS indication message may indicate the type of information to be transmitted by the STA. The estimated next TF size field may indicate the length of the trigger frame that the AP transmits next.

The SRS request indicator field set to a first value (e.g. 0) may indicate that transmission of SRS information (e.g. SRS control information) is not requested. The SRS request indicator field set to a second value (e.g. 1) may indicate that transmission of SRS information (e.g. SRS control information) is requested. When the SRS request indicator field of the trigger frame received from the AP is set to the second value, the STA may transmit a data frame (e.g. TB PPDU) including SRS control (e.g. SRS control information) to the AP. When the SRS request indicator field of the trigger frame received from the AP is set to the first value, since fields (i.e. information) that exist after the SRS request indicator field in the SRS indication message are meaningless, the STA may not interpret the fields existing after the SRS request indicator field in the SRS indication message.

The response type field may indicate the type of reception response frame that the AP transmits in response to the data frame received from the STA. The STA may accurately calculate (e.g. determine) the length of the reception response frame with a duration according to the response type field. The indication type field may indicate a length unit (e.g. time unit) of the reception response frame transmitted by the AP. The indication type field may indicate a duration, byte, or BA bitmap size. The STA may calculate the length of the reception response frame including the length of the trigger frame indicated by the estimated next TF size field. That is, when the reception response frame includes the trigger frame, the STA may calculate the length of the reception response frame by considering the length indicated by the estimated next TF size field. When the reception response frame is transmitted along with the trigger frame, the STA may calculate the length of (reception response frame + trigger frame) by considering the length indicated by the estimated next TF size field.

A length unit indicated by the estimated next TF size field may vary depending on the indication type field. If the indication type field indicates a duration, the estimated next TF size field may indicate the length of the trigger frame in unit of a duration. If the indication type field indicates a byte, the estimated next TF size field may indicate the length of the trigger frame in units of bytes. If the indication type field does not indicate a duration and/or byte, the estimated next TF size field may not be present in the SRS indication message.

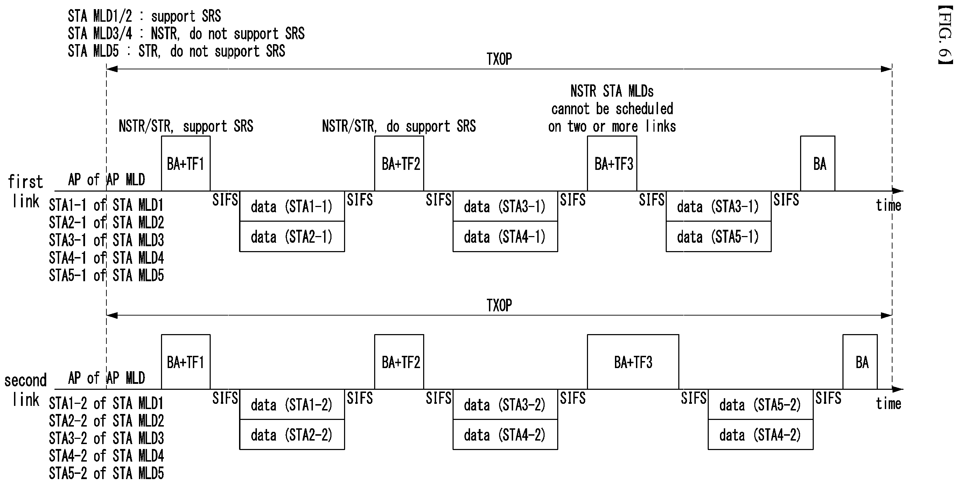

FIG. 6 is a timing diagram illustrating a second exemplary embodiment of an MU transmission method in a communication system.

As shown in FIG. 6, an AP MLD may continuously trigger MU transmission on a multi-link by transmitting trigger frames. A STA MLD may be an NSTR STA MLD or STR STA MLD. The STA MLD may support SRS. Alternatively, the STA MLD may not support SRS. STAs of the STA MLD may communicate with the AP MLD. A STA MLD1 (e.g. STA1-1 and STA1-2) and a STA MLD2 (e.g. STA2-1 and STA2-2) may support SRS. Whether the STA supports SRS may be determined depending on whether an SRS support bit of an MLD capability subfield included in an association request frame is set. When an association procedure between the STA and the AP is completed, it may be identified whether the STA MLD supports SRS.

Each of the STA MLD1 and the STA MLD2 may be an STR STA MLD or NSTR STA MLD, and may support SRS. Each of a STA MLD3 (e.g. STA3-1 and STA3-2) and a STA MLD4 (e.g. STA4-1 and STA4-2) may be NSTR STA MLDs, and may not support SRS. A STA MLD5 (e.g. STA5-1 and STA5-2) may be an STR STA MLD and may not support the SRS. Within one TXOP of each link, the AP may trigger transmission of data frames (e.g. TB PPDUs) of STAs by transmitting a plurality of trigger frames. Therefore, within one TXOP of each link, the AP may receive multiple data frames from the STAs.

A trigger frame 1 (i.e. TF1) transmitted by the AP MLD on the first link and the second link may trigger transmission of data frames of the STA MLD1 and STA MLD2. The STA MLD1 and STA MLD2 may support SRS. Therefore, the STA MLD1 and the STA MLD2 may transmit data frames each including SRS control information to the AP. The AP may receive the data frame from each of the STA MLD1 and STA MLD2, and identify SRS control information included in the data frame. The AP may perform synchronous transmissions of reception response frames on the first link and the second link based on information indicated by the SRS control information (e.g. PPDU response duration). That is, a start time, end time, and/or length of the reception response frame on the first link may be set to be the same as a start time, end time, and/or length of the reception response frame on the second link.

A trigger frame 2 (i.e. TF2) transmitted by the AP MLD on the first link and the second link may trigger transmission of data frames of the STA MLD3 and STA MLD4. The STA MLD3 and the STA MLD4 may not support SRS. Therefore, data frames transmitted by the STA MLD3 and the STA MLD4 may not include SRS control information. In this case, the AP may transmit reception response frames for the data frames without synchronization. On the multi-link, the reception response frames for the data frames according to the trigger frame 2 may not be synchronized. For example, an end time of the reception response frame (e.g. reception response frame + TF3) for the data frame triggered by the trigger frame 2 (i.e. TF2) on the first link may be different from an end time of the reception response frame (e.g. reception response frame + TF3) for the data frame triggered by the trigger frame 2 (i.e. TF2) on the second link.

In this case, a trigger frame 3 (i.e. TF3) may only trigger transmission of the data frame of the STR STA MLD to prevent transmission errors due to NSTR operations. Transmission of the data frame of the NSTR STA MLD may be triggered on only one link of the multi-link. Alternatively, transmission of data frames of the NSTR STA MLD may be triggered on links other than an NSTR link pair. In the exemplary embodiment of FIG. 6, since the first link and the second link are an NSTR link pair, transmission of the data frame of the NSTR STA MLD may be triggered only on one link. The trigger frame 3 may trigger transmission of data frames of the STA MLD5, which is an STR STA MLD, on the first link and the second link, and trigger transmission of data frame of each of the STA MLD3 and STA MLD4, which are NSTR STA MLDs, on one of the first link and the second link.

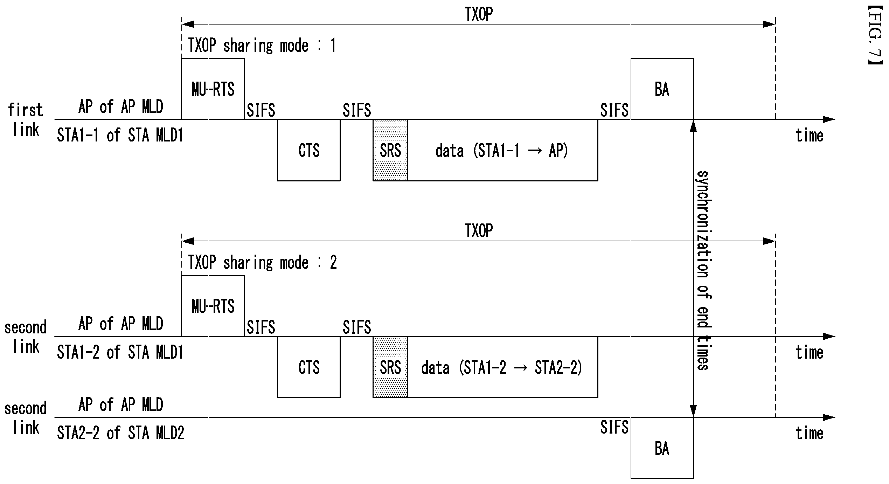

FIG. 7 is a timing diagram illustrating a first exemplary embodiment of a direct transmission method in a communication system.

As shown in FIG. 7, an AP MLD may perform single-user (SU) TXOP sharing. In this case, the AP MLD may perform synchronous transmissions on a multi-link by using SRS control information. The AP may transmit MU-request to send (MT-RTS) frames at the same time on the first link and the second link. In exemplary embodiments, the MU-RTS frame may be a MU-RTS trigger frame. On the first link, the MU-RTS frame may be transmitted to a STA1-1, and on the second link, the MU-RTS frame may be transmitted to a STA1-2. Information included in the MU-RTS frame transmitted on the first link may be different from information included in the MU-RTS frame transmitted on the second link.

The STA MLD1 may be an NSTR STA MLD. On the first link, the MU-RTS frame may include information (e.g. TXOP sharing mode) indicating that a TXOP secured by the AP is shared, and STAs may communicate with the AP within the shared TXOP. Here, the TXOP sharing mode may be set to 1, and the STAs may use the TXOP shared by the AP. Even if the STA does not directly obtain a TXOP, the STA may transmit a data frame to the AP within the TXOP shared by the AP.

On the second link, the MU-RTS frame may include information (e.g. TXOP sharing mode) indicating that the TXOP secured by the AP is shared, and the STAs may communicate with other STAs within the shared TXOP. Here, the TXOP sharing mode may be set to 2, and the STA may directly transmit a data frame to another STA within the shared TXOP. That is, when the TXOP sharing mode is set to 2, the STA may transmit a data frame to another STA in a peer to peer (P2P) (e.g. P2P based on a tunneled direct link setup (TDLS)) scheme within the shared TXOP.

The STA1-1 of the STA MLD1 may transmit a data frame to the AP on the first link. The STA1-2 of the STA MLD1 may transmit a data frame to the STA2-2, another STA, based on the P2P scheme on the second link. Since a receiver address (RA) of the data frame transmitted by the STA1-2 of STA MLD1 does not indicate the AP, the AP may not decode the data frame. The number of MPDUs included in the data frame transmitted on the first link may be different from the number of MPDUs included in the data frame transmitted on the second link. Accordingly, the length of a reception response frame for the data frame on the first link may be different from the length of a reception response frame for the data frame on the second link.

When the lengths of the reception response frames are different on the multi-link, additional transmission of a data frame within the shared TXOP may cause interference due to NSTR, and a packet error may occur due to the interference. The STA MLD1 may transmit a data frame including SRS control information on each of the first link and the second link to prevent an error of the next transmission. The STA MLD1 may compare the length of the reception response frame to be transmitted on the first link with the length of the reception response frame to be transmitted on the second link, and based on a result of the comparison, configure the longer length as length information (e.g. PPDU response duration) included in SRS control information transmitted on the first link and the second link. The PPDU response duration included in the SRS control information of the data frame on the first link may be set to be the same as the PPDU response duration included in the SRS control information of the data frame on the second link.

The AP MLD may receive the data frame from the STA1-1 of STA MLD1 on the first link, identify the PPDU response duration included in the SRS control information of the data frame, and transmit the reception response frame having the length corresponding to the PPDU response duration on the first link. The STA2-2 of STA MLD2 may receive the data frame from the STA1-2 of STA MLD1 on the second link, identify the PPDU response duration included in the SRS control information of the data frame, and transmit the reception response frame having the length corresponding to the PPDU response duration on the second link.

The reception response frames may be transmitted according to the same PPDU response duration transmitted by the STA1-1 and STA1-2 of STA MLD1. Therefore, an end time of the reception response frame transmitted by the AP MLD on the first link and an end time of the reception response frame transmitted by the STA2-2 on the second link may be synchronized. So that transmissions of the reception response frames on the multi-link are terminated in accordance with the PPDU response duration, each reception response frame may be configured in a QoS Null data frame and an A-MPDU form. Alternatively, for synchronous transmissions of the reception response frames on the multi-link, padding (e.g. MAC padding) may be added to a specific reception response frame. Alternatively, for synchronous transmissions of the reception response frames on the multi-link, a dummy signal may be transmitted after transmission of a specific reception response frame. The duration indicated by the MAC header of the reception response frame may indicate the PPDU response duration. To match the end times of the data frames (e.g. PPDUs) on the first link and the second link, padding may be added to a specific data frame.

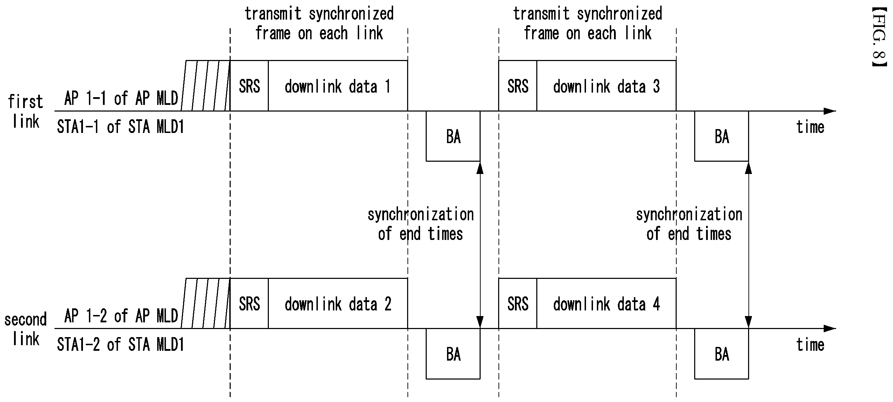

FIG. 8 is a timing diagram illustrating a first exemplary embodiment of a downlink synchronization transmission method in a communication system.

As shown in FIG. 8, an AP MLD may transmit synchronized downlink data to a STA 1-1 and STA 1-2 associated with the STA MLD1 on a multi-link (e.g. first link and second link). If the numbers of MPDU(s) or MSDU(s) included in downlink data 1 and downlink data 2 are different, lengths of BA frames, which are reception response frames, may be different. Therefore, data reception of the STA MLD 1 may be impossible due to NSTR. Therefore, before transmitting the downlink data 1 and downlink data 2, the AP MLD may calculate the lengths of the response frames (e.g. BA frames) for the downlink data, and identify the lengths (e.g. durations) of the response frames (e.g. BA frames) for the downlink data. The AP MLD may inform the STA MLD1 of information on the length of the longest response frame through SRS. For example, headers (e.g. MAC headers) of the downlink data 1 and downlink data 2 transmitted by the AP MLD may include SRS information. The SRS information may be included in the header in the A-control form. The STA 1-1 and STA 1-2 of STA MLD1, which receives the downlink data including the SRS information, may make the lengths of BA frames the same on the first link and the second link, and make transmission end times of the BA frames the same.

The exemplary embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the embodiments of the present disclosure and their advantages have been described in detail, it should be understood that various changes, substitutions and alterations may be made herein without departing from the scope of the present disclosure.

## Claims

1. A method of an access point multi-link device (AP MLD), comprising:
transmitting a first trigger frame on a first link;
transmitting a second trigger frame on a second link;
receiving a first data frame triggered by the first trigger frame on the first link;
receiving a second data frame triggered by the second trigger frame on the second link;
generating a first reception response frame and a second reception response frame having a same length;
transmitting the first reception response frame in response to the first data frame on the first link; and
transmitting the second reception response frame in response to the second data frame on the second link,
wherein transmission of the first reception response frame and transmission of the second reception response frame are synchronized.

2. The method according to claim 1, wherein the first trigger frame and the second trigger frame are transmitted simultaneously, and each of the first trigger frame and the second trigger frame triggers orthogonal frequency division multiple access (OFDMA) transmission.

3. The method according to claim 1, wherein the first trigger frame requests information on a length of the first reception response frame, and the second trigger frame requests information on a length of the second reception response frame.

4. The method according to claim 3, wherein each of the first trigger frame and the second trigger frame includes a single response scheduling (SRS) indication message requesting information on a length, and the SRS indication message includes at least one of an SRS request indicator field, a response type field, an indication type field, or an estimated next trigger frame (TF) size field.

5. The method according to claim 1, wherein the first data frame includes information on a length of the first reception response frame, and the second data frame includes information on a length of the second reception response frame.

6. The method according to claim 1, wherein the generating of the first reception response frame and the second reception response frame having the same length comprises:
identifying a first length of the first reception response frame indicated by the first data frame;
identifying a second length of the second reception response frame indicated by the second data frame;
determining a longer length among the first length and the second length as the length of the first reception response frame and the second reception response frame; and
generating the first reception response frame and the second reception response frame having the determined length.

7. The method according to claim 1, wherein the first reception response frame is transmitted together with a third trigger frame triggering transmission of a third data frame on the first link, the second reception response frame is transmitted together with a fourth trigger frame triggering transmission of a fourth data frame on the second link, and an end time of the third trigger frame and an end time of the fourth trigger frame are synchronized.

8. A method of a station (STA), comprising:
receiving a first trigger frame from an access point (AP) on a first link;
calculating a length of a first reception response frame for a first data frame triggered by the first trigger frame;
transmitting the first data frame including information on the length of the first reception response frame to the AP on the first link; and
receiving the first reception response frame for the first data frame from the AP on the first link.

9. The method according to claim 8, wherein the first trigger frame triggers orthogonal frequency division multiple access (OFDMA) transmission, and the first trigger frame requests information on a length of the first reception response frame.

10. The method according to claim 9, wherein the first trigger frame includes a single response scheduling (SRS) indication message requesting information on a length, and the SRS indication message includes at least one of an SRS request indicator field, a response type field, an indication type field, or an estimated next trigger frame (TF) size field.

11. The method according to claim 8, wherein the calculating of the length of the first reception response frame comprises:
identifying a number of medium access control (MAC) layer protocol data units (MPDUs) included in the first data frame; and
calculating the length of the first reception response frame based on the number of MPDUs.

12. The method according to claim 8, wherein a length of the first reception response frame and a length of the second reception response frame transmitted by the AP on the second link are set to be equal based on the information on the length of the first reception response frame, and the first reception response frame and the second reception response frame are transmitted synchronously by the AP.

13. An access point multi-link device (AP MLD) comprising:
a processor; and
a memory storing one or more instructions executable by the processor,
wherein the one or more instructions are executed to perform:
transmitting a first trigger frame on a first link;
transmitting a second trigger frame on a second link;
receiving a first data frame triggered by the first trigger frame on the first link;
receiving a second data frame triggered by the second trigger frame on the second link;
generating a first reception response frame and a second reception response frame having a same length;
transmitting the first reception response frame in response to the first data frame on the first link; and
transmitting the second reception response frame in response to the second data frame on the second link,
wherein transmission of the first reception response frame and transmission of the second reception response frame are synchronized.

14. The AP MLD according to claim 13, wherein the first trigger frame and the second trigger frame are transmitted simultaneously, and each of the first trigger frame and the second trigger frame triggers orthogonal frequency division multiple access (OFDMA) transmission.

15. The AP MLD according to claim 13, wherein the first trigger frame requests information on a length of the first reception response frame, and the second trigger frame requests information on a length of the second reception response frame.

16. The AP MLD according to claim 15, wherein each of the first trigger frame and the second trigger frame includes a single response scheduling (SRS) indication message requesting information on a length, and the SRS indication message includes at least one of an SRS request indicator field, a response type field, an indication type field, or an estimated next trigger frame (TF) size field.

17. The AP MLD according to claim 13, wherein the first data frame includes information on a length of the first reception response frame, and the second data frame includes information on a length of the second reception response frame.

18. The AP MLD according to claim 13, wherein in the generating of the first reception response frame and the second reception response frame having the same length, the one or more instructions are further executed to perform:
identifying a first length of the first reception response frame indicated by the first data frame;
identifying a second length of the second reception response frame indicated by the second data frame;
determining a longer length among the first length and the second length as the length of the first reception response frame and the second reception response frame; and
generating the first reception response frame and the second reception response frame having the determined length.

19. The AP MLD according to claim 13, wherein the first reception response frame is transmitted together with a third trigger frame triggering transmission of a third data frame on the first link, the second reception response frame is transmitted together with a fourth trigger frame triggering transmission of a fourth data frame on the second link, and an end time of the third trigger frame and an end time of the fourth trigger frame are synchronized.
